# FASCICULE DE BREVET EUROPEEN

(11) **EP 4 508 305 B1**
(45) Date de publication et mention de la délivrance du brevet: **31.12.2025**
(21) Numéro de dépôt: 23719034.3
(22) Date de dépôt: 14.04.2023
(51) Int. Cl.: E21B 41/00

(54) **PROCÉDÉ DE MISE EN OEUVRE D'UNE INSTALLATION POUR LA SÉQUESTRATION GÉOLOGIQUE DE DIOXYDE DE CARBONE DANS UN RÉSERVOIR AQUIFÈRE**
VERFAHREN ZUR EINRICHTUNG EINER VORRICHTUNG ZU GEOLOGISCHEN SEQUESTRIERUNG VON KOHLENDIOXID IN GRUNDWASSERLAGERSTÄTTE
METHOD OF IMPLEMENTATION OF AN INSTALLATION FOR GEOLOGICAL SEQUESTRATION OF CARBON DIOXIDE IN WATER-BEARING RESERVOIR

(30) Priorité: 14.04.2022 FR 2203482
(43) Date de publication de la demande: 19.02.2025
(73) Titulaire: Technip Energies France, 92741 Nanterre Cedex (FR)
(72) Inventeur: LOPEZ, Audrey, 92741 NANTERRE CEDEX (FR); HEME DE LACOTTE, Luc, 92741 NANTERRE CEDEX (FR); GUINDEUIL, Geoffrey, 92741 NANTERRE CEDEX (FR); HARCHAMBOIS, Stéphanie, 92741 NANTERRE CEDEX (FR); AL JAWDAH, Hayder, 92741 NANTERRE CEDEX (FR); FAVENNEC, Morvan, 92741 NANTERRE CEDEX (FR)
(74) Mandataire: Withers & Rogers
(86) Numéro de dépôt international: PCT/EP2023/059796
(87) Numéro de publication internationale: WO 2023/198895

(56) Documents cités:
- EP-A2- 1 571 105
- KLAPPERICH R.J. ET AL: "IEAGHG Investigation of Extraction of Formation Water from CO2 Storage", vol. 37, 1 January 2013 (2013-01-01), NL, pages 2479 - 2486, XP093003718, ISSN: 1876-6102, Retrieved from the Internet <URL:http://dx.doi.org/10.1016/j.egypro.2013.06.129> [retrieved on 20221130], DOI: 10.1016/j.egypro.2013.06.129

## Description

La présente invention concerne un procédé de mise en œuvre d'une installation pour la séquestration géologique de dioxyde de carbone, ladite installation comprenant : une structure, préférentiellement flottante ; un dispositif d'injection, apte à injecter un flux de dioxyde de carbone dans un réservoir géologique depuis la structure, ledit dispositif d'injection comprenant un conduit d'injection destiné à recevoir ledit flux de dioxyde de carbone en amont du réservoir géologique ; et un dispositif d'extraction, apte à extraire un flux d'eau dudit réservoir géologique, ledit dispositif d'extraction comprenant un conduit d'extraction destiné à recevoir ledit flux d'eau liquide en aval du réservoir géologique.

L'invention s'applique particulièrement aux installations off-shore, telles que décrites dans le document US2017/0283014, ou de la demande FR2107559, non encore publiée, au nom de la Demanderesse. Ces installations sont destinées à l'injection de dioxyde de carbone (CO₂) dans des réservoirs géologiques, notamment subaquatiques, à des fins de séquestration.

La séquestration du dioxyde de carbone a pour but de diminuer les émissions de gaz à effet de serre dans l'atmosphère. Il est notamment connu d'injecter le dioxyde de carbone dans des réservoirs aquifères, c'est-à-dire des sites comprenant une réserve d'eau souterraine. Le document « IEAGHG Investigation of Extraction of Formation Water from CO2 Storage », Energy Procedia 37 (2013) 2479-2486, illustre les avantages d'une extraction d'eau du réservoir simultanément à l'injection de dioxyde de carbone. Ces avantages sont par exemple une diminution de la pression à l'intérieur du réservoir, qui facilite l'injection du dioxyde de carbone. La demande EP 1 571 105 A2 décrit un procédé destiné au stockage et à la séquestration de CO₂ en solution aqueuse dans des formations géologiques contenant de l'eau de formation.

Avant l'injection, il est courant de stocker le dioxyde de carbone sous forme liquide, à des températures inférieures à -20 °C. De telles températures sont trop basses pour l'injection car elles impliquent des risques de formation d'hydrates dans les canaux de diffusion du réservoir, et/ou l'obturation desdits canaux. Avant l'injection, il est préférable de faire remonter la température du dioxyde de carbone, par exemple entre 0°C et 5°C.

Par ailleurs, l'eau extraite des réservoirs aquifères est souvent à une température élevée, par exemple entre 50°C et 65°C. L'eau extraite est par exemple rejetée en mer. Afin de respecter des normes environnementales, il convient de traiter l'eau avant de la rejeter et notamment d'abaisser sa température.

La présente invention a pour but de proposer un procédé amélioré d'injection de dioxyde de carbone dans un réservoir aquifère avec extraction simultanée d'eau dudit réservoir.

A cet effet, l'invention a pour objet un procédé de mise en oeuvre du type précité, dans lequel : l'installation comporte en outre un échangeur thermique relié à la structure et raccordé au conduit d'injection et au conduit d'extraction ; et le procédé comprend les étapes suivantes : injection du flux de dioxyde de carbone dans le réservoir géologique depuis la structure ; extraction simultanée du flux d'eau dudit réservoir géologique ; et mise en contact thermique, dans l'échangeur thermique, du flux de dioxyde de carbone en amont du réservoir géologique avec le flux d'eau extrait dudit réservoir géologique.

Suivant d'autres aspects avantageux de l'invention, le procédé de mise en oeuvre comporte l'une ou plusieurs des caractéristiques suivantes, prises isolément ou suivant toutes les combinaisons techniquement possibles :
- la structure comprend un compartiment de stockage de dioxyde de carbone à l'état liquide ; et l'injection du flux de dioxyde de carbone dans le réservoir géologique est réalisée depuis ledit compartiment de stockage ;
- l'injection du flux de dioxyde de carbone dans le réservoir géologique est réalisée en continu ;
- lors de la mise en contact thermique du flux de dioxyde de carbone et du flux d'eau extraite, lesdits flux circulent à contre-courant dans l'échangeur thermique ;
- lors de la mise en contact thermique du flux de dioxyde de carbone et du flux d'eau extraite, chacun desdits flux est en phase liquide.

L'invention se rapporte en outre à une installation pour la séquestration géologique de dioxyde de carbone, ladite installation comprenant : une structure, préférentiellement flottante ; un dispositif d'injection, apte à injecter un flux de dioxyde de carbone dans un réservoir géologique depuis la structure, ledit dispositif d'injection comprenant un conduit d'injection destiné à recevoir ledit flux de dioxyde de carbone en amont du réservoir géologique ; un dispositif d'extraction, apte à extraire un flux d'eau dudit réservoir géologique, ledit dispositif d'extraction comprenant un conduit d'extraction destiné à recevoir ledit flux d'eau liquide en aval du réservoir géologique ; et un échangeur thermique relié à la structure et raccordé au conduit d'injection et au conduit d'extraction ; l'installation étant munie de moyens de mise en oeuvre du procédé décrit ci-dessus.

Suivant un aspect avantageux de l'invention, l'échangeur thermique est un échangeur liquide/liquide.

L'invention sera mieux comprise à la lecture de la description qui va suivre, donnée uniquement à titre d'exemple non limitatif et faite en se référant aux dessins sur lesquels :
[Fig 1] la figure 1 est une représentation schématique d'une installation pour la séquestration géologique de dioxyde de carbone, selon un mode de réalisation de l'invention ; et
[Fig 2] la figure 2 est une vue de détail de l'installation de la figure 1.

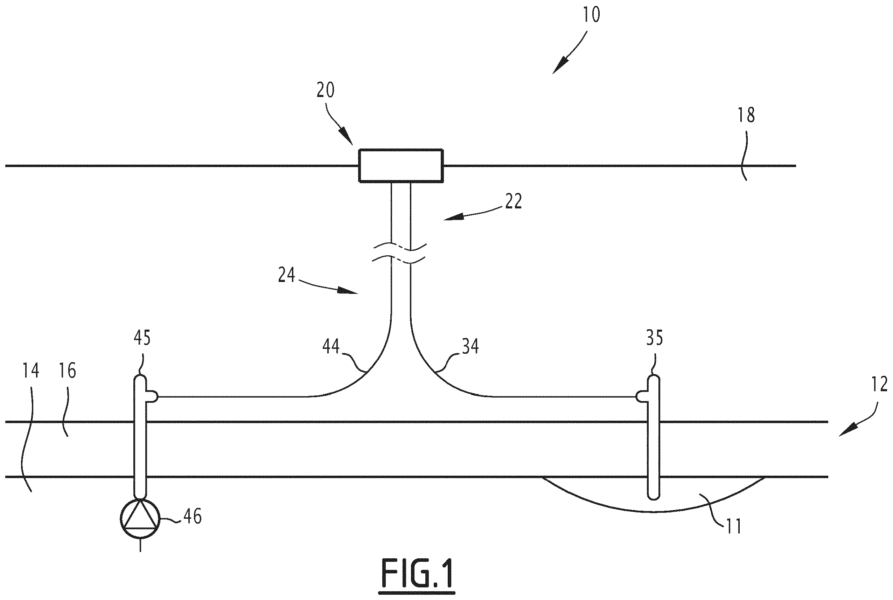

La figure 1 représente une installation 10 pour l'injection et la séquestration géologique de dioxyde de carbone, selon un mode de réalisation de l'invention. L'installation 10 est apte à recevoir et injecter du dioxyde de carbone 11 dans un réservoir géologique 12.

Le réservoir géologique 12 est un réservoir aquifère, c'est-à-dire qu'il comprend une réserve 14 d'eau retenue sous un sol 16 solide.

Dans le mode de réalisation représenté, le réservoir géologique 12 est en outre un réservoir sous-marin. Par « sous-marin », on entend que le sol 16 est recouvert par la mer 18 ou, en variante, par une étendue d'eau douce telle qu'un lac.

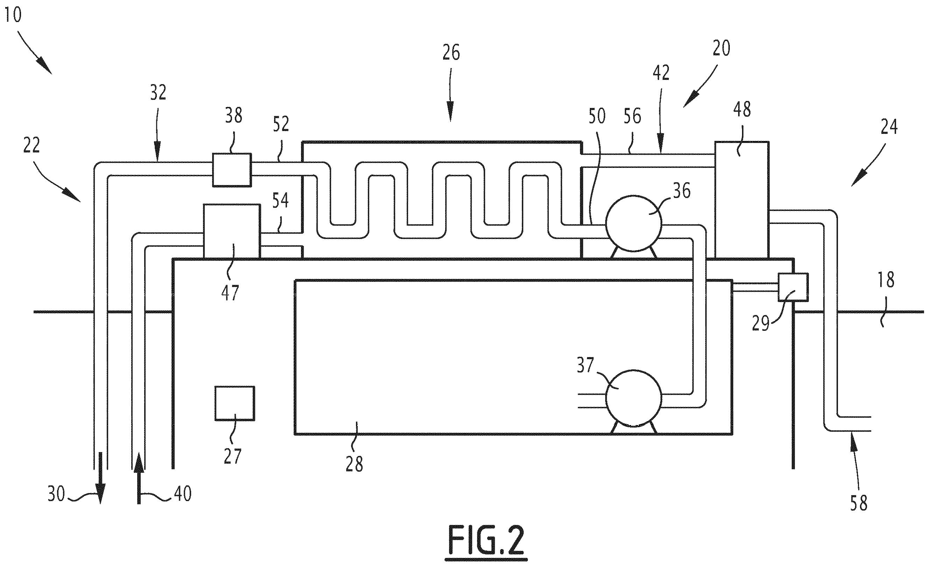

L'installation 10 comprend une structure 20, un dispositif d'injection 22, un dispositif d'extraction 24 d'eau et un échangeur de chaleur 26. Ledit échangeur de chaleur 26 est visible sur la figure 2 montrant une vue détaillée de la structure 20.

L'installation 10 comprend également un module électronique 27 de commande.

Dans le cas d'un réservoir géologique 12 sous-marin, la structure 20 est de préférence flottante, comme dans le mode de réalisation représenté. La structure 20 est par exemple une structure de type « Single Point Anchor Reservoir » (SPAR), ou une plate-forme semi-submersible, ou une coque de navire de type Offshore C-Hub^{™}.

Dans le mode de réalisation visible sur la figure 2, la structure 20 comporte en outre un compartiment 28 de stockage de dioxyde de carbone à l'état liquide.

De préférence, la structure 20 comporte en outre un dispositif 29 de connexion et de déchargement de dioxyde de carbone liquide dans le compartiment 28. De préférence, la structure 20 comporte en outre un organe de production d'énergie et/ou un organe de stockage d'énergie (non représentés), comme décrits dans la demande FR2107559 précédemment citée.

Le dispositif d'injection 22 est apte à injecter un flux 30 (figure 2) de dioxyde de carbone dans le réservoir géologique 12 depuis la structure 20. En particulier, le dispositif d'injection 22 est apte à : prélever du dioxyde de carbone à l'état liquide dans le compartiment 28 de stockage ; conditionner ledit dioxyde de carbone jusqu'à un état souhaité ; et envoyer ledit dioxyde de carbone conditionné dans le réservoir géologique 12.

Dans le mode de réalisation représenté, le dispositif d'injection 22 comprend notamment un conduit d'injection 32.

Le conduit d'injection 32 est destiné à recevoir le flux 30 en amont du réservoir géologique 12. Dans la présente description, les termes « amont » et « aval » se réfèrent au sens du flux circulant dans le conduit évoqué.

Dans le mode de réalisation représenté, le conduit d'injection 32 inclut notamment une première conduite 34 de grande longueur, immergée et disposée sous la structure 20 (figure 1). De préférence, ladite première conduite 34 est flexible. En amont de la première conduite 34, le conduit d'injection 32 est notamment formé par des canalisations solidaires de la structure 20.

Dans le mode de réalisation représenté, le dispositif d'injection 22 comprend en outre un premier puits 35, une pompe d'injection 36, une pompe de relèvement 37 et une unité 38 de conditionnement.

Le premier puits 35 (figure 1) est relié à la première conduite 34 et fixé au sol 16 sous-marin. Par « puits », on entend un dispositif formé par une tête de puits, qui dépasse dudit sol 16, et une ou plusieurs conduites rigides, par exemple en acier, qui relient ladite tête de puits à la réserve 14.

La pompe d'injection 36, la pompe de relèvement 37 et l'unité 38 de conditionnement seront décrites ultérieurement.

Le dispositif d'extraction 24 d'eau est apte à extraire un flux 40 (figure 2) d'eau liquide du réservoir géologique 12. Dans le mode de réalisation représenté, le dispositif d'extraction comprend notamment un conduit d'extraction 42.

Le conduit d'extraction 42 est destiné à recevoir le flux 40 d'eau liquide en aval du réservoir géologique 12. Dans le mode de réalisation représenté, le conduit d'extraction 42 inclut notamment une deuxième conduite 44 de grande longueur, immergée et disposée sous la structure 20. De préférence, ladite deuxième conduite 44 est flexible. En aval de ladite deuxième conduite 44, le conduit d'extraction 42 est notamment formé par des canalisations solidaires de la structure 20.

Dans le mode de réalisation représenté, le dispositif d'extraction 24 d'eau comprend en outre un deuxième puits 45, une pompe d'extraction 46, une unité 47 de dessablage et une unité 48 de traitement.

Le deuxième puits 45 (figure 1) est relié à la deuxième conduite 44 et fixé au sol 16 sous-marin. De même qu'indiqué ci-dessus pour le premier puits 35, le deuxième puits 45 comporte une tête de puits, qui dépasse dudit sol 16, et au moins une conduite qui relie ladite tête de puits à la réserve 14.

La pompe d'extraction 46 est reliée au deuxième puits 45 et située de préférence en fond de puits, dans la réserve 14. Les unités 46, 48 de dessablage et de traitement seront décrites ultérieurement.

L'échangeur thermique 26 est disposé à la fois sur le conduit d'injection 32 et sur le conduit d'extraction 42 et est ainsi apte à mettre en contact thermique le flux 30 de dioxyde de carbone et le flux 40 d'eau extraite.

En particulier, l'échangeur thermique comporte : une première entrée 50 et une première sortie 52 pour le conduit d'injection 32 ; et une deuxième entrée 54 et une deuxième sortie 56 pour le conduit d'extraction 42.

De préférence, l'échangeur thermique, le conduit d'injection 32 et le conduit d'extraction 42 sont configurés de sorte que les flux 30 et 40 circulent à contre-courant à l'intérieur dudit échangeur.

L'échangeur thermique 26 est de préférence un échangeur liquide/liquide, comme dans le mode de réalisation représenté. Sur la figure 2, l'échangeur thermique 26 est représenté schématiquement sous forme d'un échangeur à serpentin, mais d'autres types d'échangeurs liquide/liquide peuvent être utilisés. Par exemple, un échangeur avec un liquide caloporteur intermédiaire peut être utilisé.

Dans le mode de réalisation représenté, l'échangeur thermique 26 est disposé sur la structure 20.

La pompe d'injection 36 du dispositif d'injection 22 est disposée sur le conduit d'injection 32, entre le compartiment 28 de stockage et l'échangeur thermique 26.

La pompe de relèvement 37 du dispositif d'injection 22 est également disposée sur le conduit d'injection 32, au fond du compartiment 28 de stockage.

L'unité 38 de conditionnement du dispositif d'injection 22 est disposée sur le conduit d'injection 32 en aval de l'échangeur thermique 26. L'unité 38 de conditionnement, facultative, comporte des moyens de conditionnement du flux 30 de dioxyde de carbone jusqu'à un état souhaité pour la descente dans la première conduite 34. Par exemple, l'unité 38 de conditionnement comprend des moyens de chauffage supplémentaires au cas où la température du flux 30 en sortie de l'échangeur thermique 26 serait encore trop faible.

L'unité 47 de dessablage et l'unité 48 de traitement sont disposées sur le conduit d'extraction 42, respectivement en amont et en aval de l'échangeur thermique 26. L'unité 48 de traitement est par exemple configurée pour purifier le flux 40 d'eau de composés de type métaux lourds ou sels en concentration élevée.

Dans le mode de réalisation représenté, en aval de l'unité 48 de traitement, le conduit d'extraction 42 comporte une sortie 58 débouchant dans la mer 18. En variante non représentée, l'installation 10 est configurée de sorte à utiliser le flux 40 d'eau différemment, par exemple pour produire de l'eau potable.

Un procédé de fonctionnement de l'installation 10 décrite ci-dessus va maintenant être décrit.

Ledit procédé est piloté par le module électronique 27 de commande, notamment au moyen des pompes d'injection 36, de relèvement 37 et d'extraction 45.

Ledit procédé comprend notamment les étapes suivantes : génération d'un flux 30 de dioxyde de carbone dans le conduit d'injection 32, pour injection dans le réservoir géologique 12 ; en parallèle, génération d'un flux 40 d'extraction d'eau depuis ledit réservoir géologique 12 ; et mise en contact thermique desdits flux 30 et 40 dans l'échangeur thermique 26.

Par exemple, la pompe de relèvement 37 et la pompe d'injection 36 transfèrent vers l'échangeur thermique 26 un flux 30 de dioxyde de carbone liquide, stocké préalablement dans le compartiment 28 de stockage. Etant données les conditions de stockage, au niveau de la première entrée 50 de l'échangeur thermique 26, le dioxyde de carbone liquide est par exemple à une pression d'entrée élevée, de l'ordre de 100 bars, et à une température d'entrée inférieure à -20 °C, par exemple entre -50 °C et -45 °C.

En parallèle, la pompe d'extraction 46 génère, au niveau du deuxième puits 45, un flux 40 d'eau extraite de la réserve 14 du réservoir géologique 12. Au niveau de la structure 20, ledit flux 40 est d'abord dessablé par l'unité 47 de dessablage avant d'arriver à la deuxième entrée 54 de l'échangeur thermique 26. Au niveau de ladite deuxième entrée 54, le flux 40 est liquide, par exemple à une pression d'entrée de l'ordre de 5 à 6 bars et à une température d'entrée comprise entre 60 °C et 70 °C.

Les flux 30 et 40 liquides circulent à contre-courant dans l'échangeur thermique 26 et le flux 40 d'eau cède de la chaleur au flux 30 de dioxyde de carbone. Au niveau de la première sortie 52 de l'échangeur thermique 26, le flux 30 de dioxyde de carbone liquide est par exemple à une pression de sortie proche de la pression d'entrée, avec un écart de 0 à 5 bars ; et à une température de sortie supérieure à la température d'entrée.

La température de sortie du flux 30 est de préférence de l'ordre de 0 °C à 5 °C, ce qui représente une température appropriée à l'injection de dioxyde de carbone liquide dans le réservoir géologique 12.

Au niveau de la deuxième sortie 56 de l'échangeur thermique 26, le flux 40 d'eau est par exemple à une pression de sortie proche de la pression d'entrée, avec un écart de 0 à 2 bars ; et à une température de sortie inférieure à la température d'entrée.

La température de sortie du flux 40 est par exemple de l'ordre de 40 °C à 45 °C, ce qui représente une température appropriée à un rejet en mer.

L'installation 10 selon l'invention permet donc un traitement thermique approprié, à la fois du dioxyde de carbone à injecter et de l'eau extraite du même réservoir géologique. L'installation 10 permet donc d'éviter l'utilisation de dispositifs de chauffage et de refroidissement supplémentaires.

Cependant, en aval de l'échangeur thermique 26, le flux 30 de dioxyde de carbone est facultativement réchauffé par l'unité 38 de conditionnement, si la température de sortie est insuffisante.

En aval de ladite unité 38 de conditionnement, ledit flux 30, de préférence à l'état liquide, atteint la première conduite 34 puis est injecté dans le réservoir géologique 12 au niveau du puits 35.

L'extraction du flux d'eau 40 simultanément à l'injection de dioxyde de carbone permet de faciliter ladite injection en abaissant la pression dans le réservoir géologique 12.

En aval de l'échangeur thermique 26, le flux 40 d'eau est traité par l'unité 48 de traitement, qui élimine de l'eau des composés polluants tels que du mercure. Le flux 40 d'eau est enfin rejeté à la mer 18 par la sortie 58.

De préférence, le dispositif d'injection 22 effectue une injection continue de dioxyde de carbone dans le réservoir géologique 12, notamment depuis le compartiment 28 de stockage. Par « injection continue », on entend que le débit d'injection du dispositif d'injection 22 vers le réservoir géologique 12 est en permanence strictement supérieur à zéro. L'injection continue permet de diminuer les risques de formation d'hydrates dans les canaux de diffusion dudit réservoir géologique.

Lorsque le niveau de dioxyde de carbone est faible dans le compartiment 28, ledit compartiment 28 est alimenté au moyen du dispositif 29 de connexion et de déchargement. Un navire transporteur de dioxyde de carbone liquide vient par exemple s'accoupler au dispositif 29 pour remplir le compartiment 28.

## Revendications

1. Procédé de mise en oeuvre d'une installation (10) pour la séquestration géologique de dioxyde de carbone, ladite installation comprenant :
- une structure (20), préférentiellement flottante ;
- un dispositif d'injection (22), apte à injecter un flux (30) de dioxyde de carbone dans un réservoir géologique (12) depuis la structure, ledit dispositif d'injection comprenant un conduit d'injection (32) destiné à recevoir ledit flux de dioxyde de carbone en amont du réservoir géologique ; et
- un dispositif d'extraction (24), apte à extraire un flux (40) d'eau dudit réservoir géologique, ledit dispositif d'extraction comprenant un conduit d'extraction (42) destiné à recevoir ledit flux d'eau liquide en aval du réservoir géologique ;
le procédé étant **caractérisé en ce que** :
- l'installation comporte en outre un échangeur thermique (26) relié à la structure et raccordé au conduit d'injection et au conduit d'extraction ; et
- le procédé comprend les étapes suivantes : injection du flux (30) de dioxyde de carbone dans le réservoir géologique (12) depuis la structure (20) ; extraction simultanée du flux (40) d'eau dudit réservoir géologique ; et mise en contact thermique, dans l'échangeur thermique (26), du flux de dioxyde de carbone en amont du réservoir géologique avec le flux d'eau extrait dudit réservoir géologique.

2. Procédé selon la revendication 1, dans lequel : la structure comprend un compartiment (28) de stockage de dioxyde de carbone à l'état liquide ; et l'injection du flux de dioxyde de carbone dans le réservoir géologique est réalisée depuis ledit compartiment de stockage.

3. Procédé selon la revendication 1 ou la revendication 2, dans lequel l'injection du flux (30) de dioxyde de carbone dans le réservoir géologique est réalisée en continu.

4. Procédé selon l'une des revendications précédentes, dans lequel, lors de la mise en contact thermique du flux (30) de dioxyde de carbone et du flux (40) d'eau extraite, lesdits flux circulent à contre-courant dans l'échangeur thermique (26).

5. Procédé selon l'une des revendications précédentes, dans lequel, lors de la mise en contact thermique du flux (30) de dioxyde de carbone et du flux (40) d'eau extraite, chacun desdits flux est en phase liquide.

6. Installation (10) pour la séquestration géologique de dioxyde de carbone, ladite installation comprenant :
- une structure (20), préférentiellement flottante ;
- un dispositif d'injection (22), apte à injecter un flux (30) de dioxyde de carbone dans un réservoir géologique (12) depuis la structure, ledit dispositif d'injection comprenant un conduit d'injection (32) destiné à recevoir ledit flux de dioxyde de carbone en amont du réservoir géologique ;
- un dispositif d'extraction (24), apte à extraire un flux (40) d'eau dudit réservoir géologique, ledit dispositif d'extraction comprenant un conduit d'extraction (42) destiné à recevoir ledit flux d'eau liquide en aval du réservoir géologique ; et **caractérisée en ce que** ladite installation comprend:
- un échangeur thermique (26) relié à la structure et raccordé au conduit d'injection et au conduit d'extraction ;
l'installation étant munie de moyens de mise en oeuvre du procédé selon l'une des revendications précédentes.

7. Installation selon la revendication 6, dans laquelle l'échangeur thermique (26) est un échangeur liquide/liquide.

## Patentansprüche

1. Verfahren zum Implementieren einer Anlage (10) für die geologische Sequestrierung von Kohlendioxid, die Anlage umfassend:
- eine vorzugsweise schwimmende Struktur (20);
- eine Injektionsvorrichtung (22), die geeignet ist, um einen Kohlendioxidstrom (30) aus der Struktur in ein geologisches Reservoir (12) zu injizieren, die Injektionsvorrichtung umfassend eine Injektionsleitung (32), die dazu bestimmt ist, den Kohlendioxidstrom stromaufwärts des geologischen Reservoirs aufzunehmen; und
- eine Extraktionsvorrichtung (24), die geeignet ist, um einen Wasserstrom (40) aus dem geologischen Reservoir zu extrahieren, die Extraktionsvorrichtung umfassend eine Extraktionsleitung (42), die dazu bestimmt ist, den flüssigen Wasserstrom stromabwärts des geologischen Reservoirs aufzunehmen;
wobei das Verfahren **dadurch gekennzeichnet ist, dass**:
- die Anlage ferner einen Wärmetauscher (26) aufweist, der mit der Struktur verbunden ist und an die Injektionsleitung und an die Extraktionsleitung angeschlossen ist; und
- das Verfahren die folgenden Schritte umfasst: Injizieren des Kohlendioxidstroms (30) aus der Struktur (20) in das geologische Reservoir (12); gleichzeitiges Extrahieren des Wasserstroms (40) aus dem geologischen Reservoir; und Bringen in Wärmekontakt, in dem Wärmetauscher (26), des Kohlendioxidstroms stromaufwärts des geologischen Reservoirs mit dem Wasserstrom, der aus dem geologischen Reservoir extrahiert wird.

2. Verfahren nach Anspruch 1, wobei: die Struktur ein Fach (28) zum Aufbewahren von Kohlendioxid in dem flüssigen Zustand umfasst; und die Injektion des Kohlendioxidstroms in das geologische Reservoir von diesem Aufbewahrungsfach aus durchgeführt wird.

3. Verfahren nach Anspruch 1 oder 2, wobei die Injektion des Kohlendioxidstroms (30) in das geologische Reservoir kontinuierlich durchgeführt wird.

4. Verfahren nach einem der vorstehenden Ansprüche, wobei während des Bringens in Wärmekontakt des Kohlendioxidstroms (30) und des extrahierten Wasserstroms (40) de Ströme in dem Wärmetauscher (26) in einem Gegenstrom zirkulieren.

5. Verfahren nach einem der vorstehenden Ansprüche, wobei sich während dem Bringen in Wärmekontakt des Kohlendioxidstroms (30) und des extrahierten Wasserstroms (40) jeder der Ströme in der flüssigen Phase befindet.

6. Anlage (10) für die geologische Sequestrierung von Kohlendioxid, die Anlage umfassend:
- eine vorzugsweise schwimmende Struktur (20);
- eine Injektionsvorrichtung (22), die geeignet ist, um einen Kohlendioxidstrom (30) aus der Struktur in ein geologisches Reservoir (12) zu injizieren, die Injektionsvorrichtung umfassend eine Injektionsleitung (32), die dazu bestimmt ist, den Kohlendioxidstrom stromaufwärts des geologischen Reservoirs aufzunehmen;
- eine Extraktionsvorrichtung (24), die geeignet ist, um einen Wasserstrom (40) aus dem geologischen Reservoir zu extrahieren, die Extraktionsvorrichtung umfassend eine Extraktionsleitung (42), die dazu bestimmt ist, den flüssigen Wasserstrom stromabwärts des geologischen Reservoirs aufzunehmen; und
**dadurch gekennzeichnet, dass** die Anlage umfasst:
- einen Wärmetauscher (26), der mit der Struktur verbunden ist und an die Injektionsleitung und an die Extraktionsleitung angeschlossen ist;
wobei die Anlage mit Mitteln zum Implementieren des Verfahrens nach einem der vorstehenden Ansprüche ausgestattet ist.

7. Anlage nach Anspruch 6, wobei der Wärmetauscher (26) ein Flüssigkeit/Flüssigkeit-Wärmetauscher ist.

## Claims

1. A method for operating an installation (10) for the geological sequestration of carbon dioxide, said installation comprising:
- a structure (20), preferentially a floating structure;
- an injection device (22), suitable for injecting a flow (30) of carbon dioxide into a geological reservoir (12) from the structure, said injection device comprising an injection pipe (32) for receiving said flow of carbon dioxide upstream of the geological reservoir; and
- an extraction device (24) suitable for extracting a flow (40) of water from said geological reservoir, said extraction device comprising an extraction pipe (42) for receiving said flow of liquid water downstream of the geological reservoir;
the method being **characterized in that:**
- the system further comprises a heat exchanger (26) connected to the structure and to the injection and extraction pipes; and
- the method comprises the following steps: injecting the flow of carbon dioxide (30) into the geological reservoir (12) from the structure (20); simultaneously extracting of the flow of water (40) from said geological reservoir; and bringing the flow of carbon dioxide upstream of the geological reservoir into thermal contact, within the heat exchanger (26), with the flow of water extracted from said geological reservoir.

2. The method according to claim 1, wherein: the structure comprises a compartment (28) for storing carbon dioxide in a liquid state; and the flow of carbon dioxide into the geological reservoir is injected from said storage compartment.

3. The method according to claim 1 or claim 2, wherein the injection of the flow of carbon dioxide (30) into the geological reservoir is carried out continuously.

4. The method according to one of the preceding claims, wherein, when the flow of carbon dioxide (30) is brought into thermal contact with the extracted flow of water (40), said flows circulate in counter-current in the heat exchanger (26).

5. The method according to one of the preceding claims, wherein, when the flow of carbon dioxide (30) is brought into thermal contact with the extracted flow of water (40), each of said flows is in the liquid phase.

6. An installation (10) for the geological sequestration of carbon dioxide, said installation comprising:
- a structure (20), preferentially a floating structure;
- an injection device (22), suitable for injecting a flow (30) of carbon dioxide into a geological reservoir (12) from the structure, said injection device comprising an injection pipe (32) for receiving said flow of carbon dioxide upstream of the geological reservoir;
- an extraction device (24) suitable for extracting a flow (40) of water from said geological reservoir, said extraction device comprising an extraction pipe (42) for receiving said flow of liquid water downstream of the geological reservoir; and
**characterized in that** said installation comprises:
- a heat exchanger (26) connected to the structure and to the injection and extraction pipes;
the installation being equipped with means for implementing the method according to one of the preceding claims.

7. The installation according to claim 6, wherein the heat exchanger (26) is a liquid/liquid exchanger.
